# EUROPÄISCHE PATENTSCHRIFT

(11) **EP 3 446 383 B1**
(45) Veröffentlichungstag und Bekanntmachung des Hinweises auf die Patenterteilung: **13.05.2020**
(21) Anmeldenummer: 17718007.2
(22) Anmeldetag: 03.03.2017
(51) Int. Cl.: H02G 15/013, H02G 15/007, H02G 15/18, H01R 4/22, H01R 13/60, H02G 3/08, H01R 13/52, H01R 13/58, H02G 15/115, H02G 15/117

(54) **ANORDNUNG ALS ABZWEIGDOSENERSATZ SOWIE VERFAHREN ZUM INSTALLIEREN DIESER ANORDNUNG**
ASSEMBLY AS A JUNCTION BOX REPLACEMENT AND METHOD FOR INSTALLING SAID ASSEMBLY
SYSTÈME UTILISÉ EN REMPLACEMENT D'UNE BOÎTE DE DÉRIVATION ET PROCÉDÉ D'INSTALLATION DE CE SYSTÈME

(30) Priorität: 23.04.2016 DE 202016002651 U; 03.06.2016 DE 202016102981 U
(43) Veröffentlichungstag der Anmeldung: 27.02.2019
(73) Patentinhaber: Q-One Deutschland UG, 28832 Achim (DE)
(72) Erfinder: HÖHNE, Bernd, 28832 Achim (DE)
(74) Vertreter: Hansen, Jochen
(86) Internationale Anmeldenummer: PCT/DE2017/100170
(87) Internationale Veröffentlichungsnummer: WO 2017/182017

(56) Entgegenhaltungen:
- WO-A2-2010/084343
- AT-U1- 4 581
- FR-A1- 2 815 777
- FR-A1- 2 877 778
- US-A- 3 962 554
- US-B1- 7 109 423

## Beschreibung

Die Erfindung betrifft eine Anordnung als Abzweigdosenersatz mit wenigstens zwei an der Anordnung endenden, mit einer Schutzumhüllung versehenen Elektrokabeln mit einzelnen mit einer Isolierung versehenen elektrischen Leitern, wobei eine Hülle, die aus einem festen Material in Raumform mit einer Öffnung, durch die die Enden der Elektrokabel einfügbar sind, gebildet ist, und ein Verspannmittel vorgesehen sind, wobei die Hülle die Enden der Elektrokabel, die Schutzumhüllung überlappend, umhüllt und das Verspannmittel wenigstens einen Teil der Hülle und die Elektrokabel mit der Schutzumhüllung umgreifend angeordnet ist. Ferner betrifft die Erfindung ein Verfahren zum Installieren dieser Anordnung.

Beim Innenausbau von Gebäuden bedient man sich immer häufiger abgehängter Decken, doppelter Böden und Trockenbau-Wänden, um mehr Flexibilität zur Umgestaltung der Räume zu sichern. Damit verändern sich die Anforderungen an die dort verlegte Elektroinstallation. Installationsmaterial ist konventionell ausgelegt für festes Mauerwerk und wird bestimmungsgemäß unterschieden nach Unterputz-Montage (UP) und Aufputz-Montage (AP). Bei beiden klassischen Montagearten werden elektrische Kabel überwiegend fest verlegt. Beim flexibleren Innenausbau dagegen erfolgt die Verlegung elektrischer Leitungen in abgehängten Decken, Doppelböden und Trockenbauwänden überwiegend lose.

Insbesondere Abzweigdosen werden den Anforderungen flexibler Hohlrauminstallationen mit lose verlegten Elektrokabeln nicht gerecht.

Bekannt sind Abzweigdosen zur Verwendung auf Putz mit und ohne Spritzwasserschutz die vielfach auch bei Lose-Installationen in Hohlräumen Verwendung finden. Solche Abzweigdosen verfügen über keine angemessene Zugentlastung. Ihre Konstruktion ist eher geeignet um fest verlegte Leitungen zu verzweigen. Ihre Verwendung in Doppelböden und Hohldecken ist ineffizient und benötigt viel Zeit, wenn sie unbefestigt verklemmt werden, da für jedes Kabel ein Loch zur Einführung in die Dose gestanzt wird, bevor dann Kabel für Kabel mit Kraftaufwand jeweils in ein dafür vorgesehenes Loch in die Dose eingeführt wird und verklemmt werden kann. Dabei behindert zusätzlich die Enge der Dose je nach Anzahl der Abzweige die Verklemmung, was erheblich Zeit kostet, bevor die Dose zuletzt noch mit einem separaten Deckel verschlossen wird.

Die bekannten häufig in Hohlräumen verwendeten Aufputz-Abzweigdosen verfügen einerseits oft über einen Spritzwasserschutz, der in Trockenräumen entbehrlich wäre, aber es fehlt andererseits an einer angemessenen Zugentlastung, die besonders bei späteren Arbeiten an der Installation verhindert, dass Drähte durch Zug gelockert werden, so dass Fehlkontaktierungen an Klemmkontakten entstehen, die eine Brandgefahr darstellen können. Die Handhabung der bekannten Abzweigdosen ist umständlich und zeitraubend bei solchen Lose- Installationen. Zur effizienten Handhabung müsste die Dose zunächst befestigt werden, wodurch die Vorteile der losen Verkabelung zunichte gemacht würden.

Die DE 21 29 342 C3 beschreibt eine Kapseleinrichtung zur Aufnahme von Spleißverbindungen elektrischer Leiter mit einer flüssigkeitsdichten Umhüllung, in der eine Einlage aus dickwandigem porösem offenzelligem Material angeordnet ist und mit einer die Spleißverbindungen umschließenden und in das poröse Material eindringenden fließfähigen Isoliermaterialmasse, wobei die Isoliermaterialmasse aus einem Material von permanent gelartiger Konsistenz besteht. Damit diese elastische Hülle mit der eingefüllten Isoliermaterialmasse nicht ausläuft, ist ein Verschlussband vorgesehen, das einen öffenbaren Saum gegen unbeabsichtigtes Öffnen sichert. Diese Vorrichtung enthält keine Zugentlastung.

Aus der WO 2012/163877 A1 ist eine Endkappe zur Verbindung von abisolierten Kabelenden bekannt, bei der alle Kabelenden miteinander zu einem einzigen Kontakt verbunden werden. Aus dieser Schrift ist ein zweiteiliges Gehäuse bekannt, in das eine Klemmeinheit einfügbar ist, in der zwei Verspannmittel vorgesehen sind, die einmal die isolierten Kabel aufeinander fixieren und das andere Mal die abisolierten Kabelenden zur Kontaktierung aufeinander pressen. Mit dieser Vorrichtung kann jedoch lediglich eine einzelne Kontaktierung vorgenommen werden, wohingegen eine Vielzahl von einzelnen Kontakten entsprechend einer üblich kontaktierten Abzweigdose nicht beschrieben ist.

Aus der JP 2013-192432 A ist eine Verteilerdose für mehrere Kabel mit Kontaktverbindern bekannt, die durch eine Einstecköffnung geschützt in einem Kasten aufgenommen sind, wobei die Öffnung mittels einer Klappe/Abdeckung vor unberechtigtem Zugriff mit einer Sperrwirkung gegen ein Wiederöffnen ausgestattet ist. Insoweit ist ein Eingriffsschutz realisiert, wohingegen mit dieser Klappe/Abdeckung keine Zugentlastung für die in die Verteilerdose geführten Elektrokabel möglich ist.

Die JP 2000-92 684 A beschreibt eine Isolierkappe, die über eine Kabelverschraubung gestülpt und mit einem Spannmittel mit dem Kabel verankert wird. Das Spannmittel dient somit zur Fixierung der Isolierkappe auf den Kabelende, jedoch nicht der Zugentlastung. Sie ist nicht für mehrere Kabelkontaktierungen, wie für eine Abzweigdose erforderlich, geeignet.

Aus der FR 2 877 778 A1 sowie der FR 2 815 777 A1 sind Vorrichtungen zum Schutz eines elektrischen Verbinders bekannt, bei denen Drähte von mindestens einem elektrischen Kabel in einen über eine Zugangsöffnung erreichbaren Lichtmast kontaktiert sind. In der FR 2 877 778 A1 wird eine elastische Hülle beschrieben, in die die kontaktierten Kabel eingesteckt werden. Dabei sind die Enden der Elektrokabel in die Schutzumhüllung überlappend eingesteckt und mit einem Kabelbinder umgreifend verspannt. In der FR 2 815 777 A1 wird das kontaktierte Kabel in ein rohrförmiges Element eingesteckt und mit einem Kabelbinder daran fixiert.

Das US 3,962,554 A beschreibt eine elektrische Isolierungsschutzvorrichtung für ein Kabelende mit mehreren Einzeladern, die teils untereinander kontaktiert sind, bei der über das freie Kabelende ein Plastikbeutel übergezogen ist, der die elektrisch kontaktierten Leiterenden in einem Hohlraum einschließt, wobei zusätzlich in dem Hohlraum ein Antioxidationsmittel vorgehalten ist. Zwischen der dicken Außenisolierung des Kabels und dem daran aufgesetzten Plastikbeutel ist ein "B-sealing tape" aus Polyisobutylen vorgesehen, mit dem diese Verbindung luftdicht abgedichtet wird.

Aus der US 7,109,423 B1 ist eine Schutzanordnung für eine elektrische Verbindung und ein Verfahren für die Verwendung derselben beschrieben. Dabei handelt es sich um eine elektrische Stichleitungsverbindung, bei der ein erster mit einem zweiten Leiter verbunden wird, also lediglich ein Pol in der Anordnung vorgesehen ist. Dabei wird die Leiterverbindung in eine Hülle zusammen mit einem isolierenden Gel eingeschoben und mittels Kabelbinder fixiert.

Ferner ist aus der WO 2010/084343 A2 ein Gehäuse für eine elektrische Verbindung bekannt, bei der zwei Kabelenden über einen Kontaktierungsblock, beispielsweise Lüsterklemmen, miteinander verbunden sind, wobei die beiden Kabel jeweils durch eine Öffnung eines Schutzgehäuseteils geführt und die beiden Schutzgehäuseteile miteinander verbindbar sind. Dabei ist jedes Kabel an seinem Gehäuseteil im Bereich seiner Durchführung mittels eines Kabelbinders fixiert.

Aus der AT 004 581 U1 ist eine Muffe zum Schutz von Kabel- und Leitungsverbindungen bekannt, bei der ein Muffenkörper einen Innenraum umschließt und eine Öffnung aufweist, durch die zu verbindenden Kabel in den Innenraum eintreten. Dabei ist ein Deckel zum Verschließen der Öffnung vorgesehen, wobei im Deckel Öffnungen zum Durchführen der Kabel vorgesehen sind und ein gesondertes Dichtelement zwischen Deckel und Muffenkörper vorgesehen ist, das die Kabeldurchführungen abdichten soll.

Aufgabe der Erfindung ist es, eine Anordnung zur Verzweigung von Elektrokabeln als Abzweigdose bereitzustellen, welche insbesondere den Anforderungen flexibler Lose- Installationen in abgehängten Decken, Doppelböden und Trockenbauwänden gerecht wird und einfacher und effizienter zu handhaben ist und gegenseitig eine Zugentlastung gewährleistet.

Gelöst wird diese Aufgabe mit einer Anordnung nach Anspruch 1 und einem Verfahren zum Installieren nach Anspruch 9.

Dadurch, dass das Verspannmittel wenigstens einen Teil der Hülle und die Elektrokabel mit der Schutzumhüllung umgreifend angeordnet und zur gegenseitigen Zugentlastung verspannt ist, werden die Kabel fest mit der Hülle verbunden. Das Verspannmittel bewirkt für die zwei oder mehr Elektrokabel, deren elektrische Leiter beispielsweise über elektrische Klemmen miteinander kontaktiert sind, eine Verankerung aller eingeführten Elektrokabel zusammen mit der Hülle. Die Elektrokabel geben untereinander somit eine Zugentlastung, die über die steife und belastbare Schutzumhüllung der Elektrokabel gewährleistet wird. Derartige Elektrokabel sind beispielsweise Kunststoffmantelleitungen mit dem Kürzel NYM(-J) oder Erdkabel mit dem Kürzel NYY(-J). Somit ist der in die Hülle reichende Bereich der Elektrokabel von etwaigen Zugbelastungen entkoppelt. Ein sich Lösen von einzelnen elektrischen Leitern in elektrischen Klemmen mit der Gefahr von Wackelkontakten und Brandgefahr wird vermieden.

Wenn die Hülle aus festem Material im Bereich der Öffnung aus elastischem Material gebildet ist, wobei das elastische Material an der im Übrigen aus festem Material bestehenden Hülle angeformt ist, kann in dieser Materialkombination sowohl eine mechanisch feste Dosenstruktur für die in die Hülle einzusteckende Kabelenden, wie auch ein elastischer, vor unbefugtem Eingriff gesicherter und Spritzwasser geschützter Verschluss der Öffnung durch Zusammenziehen des elastischen Materials im Bereich des Verspannmittels ermöglicht werden. Wenn die Hülle aus einem elektrisch nichtleitenden und reißfesten Material gebildet ist, ist eine sichere elektrische Isolierung in in der Hülle aufgenommener elektrischer Leiter zum Außenraum gegeben. Auch bei mechanischer Beanspruchung der Hülle bei Bau- oder Restaurierungstätigkeiten ist eine Verletztung der Hülle und damit der elektrischen Isolierung unwahrscheinlich.

Wenn die Hülle im Bereich des Verspannmittels ein dauerelastisches Dichtmittel aufweist, kann der (Spritz-)Wasserschutz weiter verbessert werden. Gegebenenfalls widersteht die Anordnung ein kurzzeitiges Eintauchen in Wasser gemäß IP 57.

Dadurch, dass die Hülle nach der Bestückung mit den Elektrokabeln und dem Verspannen mit dem Verspannmittel mit einer dauerelastischen Dichtmasse vollständig befüllt ist, kann ein verbesserter Feuchtigkeitsschutz, gegebenenfalls sogar Wasserdichtigkeit erreicht werden. Als Dichtmassen eignen sich insbesondere dauerelastische Massen, beispielsweise Silikon oder geschlossen zellige Schaummassen. Verfahrensgemäß wird dies dadurch gelöst, dass die Hülle nach der Bestückung mit den Elektrokabeln und dem Verspannen mit dem Verspannmittel mit einer dauerelastischen Dichtmasse vollständig befüllt wird.

In weiterer Ausgestaltung ist die Hülle zweiteilig ausgebildet, wobei eine innere Hülle aus elastischem Material und eine äußere Hülle in einer festen Raumform vorgesehen sind. Damit kann die äußere Hülle einen Schutz vor mechanischen Belastungen und einen ausreichenden Raum zur nicht zu engen Einlage von miteinander zu kontaktierenden Elektrokabeln sicherstellen, wobei eine innere Hülle aus elastischem Material, die ebenfalls mit dem Verspannmittel mit den Kabeln zusammen verspannt ist, einerseits einen Eingriffschutz in die Öffnung der eine Raumform bildenden Hülle wie auch andererseits einen Spritzwasserschutz darstellen.

Wenn in der Raumform nahe der Öffnung ein sich über die Öffnung erstreckender Eingriffschutz vorgesehen ist, wird die Sicherheit vor elektrischen Schlägen weiter erhöht.

Dadurch, dass der Eingriffschutz einseitig an der Hülle in der Raumform fixiert ist und an seinem anderen Ende von dem Verspannmittel umgreifend fixiert ist, wird der Eingriffschutz beim Verspannen der eingefügten Elektrokabelenden gleich an der Anordnung mit fixiert. Verfahrensgemäß wird dies dadurch gelöst, dass die Öffnung an der Hülle mit einem Eingriffschutz verschlossen wird, indem der Eingriffschutz zusammen mit den Elektrokabeln mit dem Verspannmittel verspannt wird.

Bevorzugt ist das Verspannmittel ein Kabelbinder, eine Spannschelle oder eine Schraubklemme.

Wenn das Verspannmittel an der Hülle befestigt oder durch die Hülle gesteckt ist, wird das Verspannmittel stets an der richtigen Stelle vorgehalten und kann nach Einstecken der Elektrokabelenden gleich unmittelbar verspannt werden.

Für die Funktion als Abzweigdose sind das/die Elektrokabel am Ende der elektrischen Leiter an elektrischen Klemmen befestigt. Entsprechend wird eine derartige Anordnung mit den Schritten Kontaktieren der elektrischen Leiter mittels elektrischer Klemmen, Einführen der Enden der Elektrokabel in die Hülle durch das noch nicht verspannte Verspannmittel und Anziehen des Verspannmittels und damit mechanisches Verbinden der Schutzumhüllungen der Elektrokabel untereinander und mit der Hülle installiert, wobei die Öffnung an der Hülle mit einem Eingriffschutz verschlossen wird, indem der Eingriffschutz zusammen mit den Elektrokabeln mit dem Verspannmittel verspannt wird.

Nachfolgend werden verschiedene Ausführungsbeispiele der Erfindung anhand der beiliegenden Zeichnungen detailliert beschrieben.

Darin zeigt:
- Fig. 1 a, b, c: eine Anordnung als Abzweigdosenersatz in drei, teils geschnittenen Ansichten in einer ersten Ausführungsform
- Fig. 2 a, b, c: eine Anordnung als Abzweigdosenersatz in einer zweiten Ausführungsform,
- Fig. 3 a, b, c, d: eine Anordnung als Abzweigdosenersatz in einer dritten Ausführungsform,
- Fig. 4 a, b: eine Anordnung als Abzweigdosenersatz in einer vierten nicht beanspruchten Ausführungsform,
- Fig. 5 a, b: eine Anordnung als Abzweigdosenersatz beziehungsweise die Hülle mit Verspannmittel in einer fünften nicht beanspruchten Ausführungsform und
- Fig. 6 a, b: eine Anordnung als Abzweigdosenersatz beziehungsweise die Hülle mit Verspannmittel in einer sechsten nicht beanspruchten Ausführungsform.

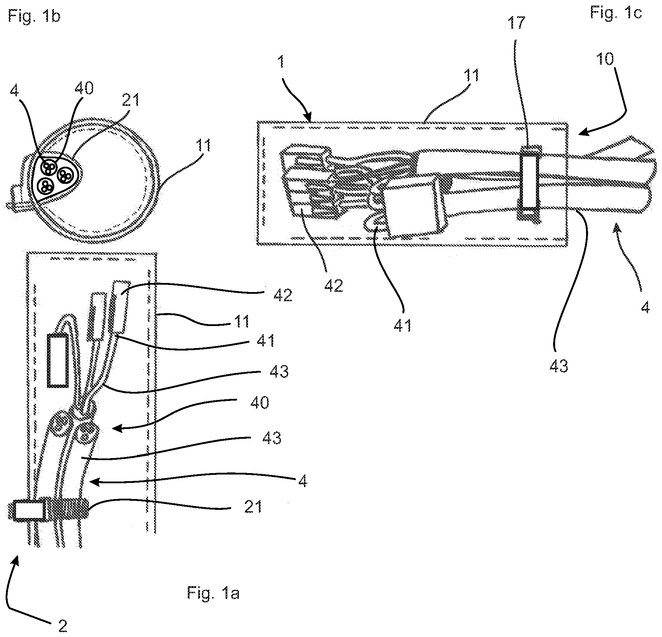

In Fig. 1 ist in einer ersten Ausführungsfrom eine Anordnung als Abzweigdosenersatz in drei teils geschnittenen Ansichten dargestellt. Die Anordnung weist eine Hülle 1 aus einem festen, elektrisch nicht leitenden Material in Zylinderform auf. In Fig. 1a ist eine Seitenansicht von einer ersten Seite, in Fig. 1b in teils geschnittener Draufsicht auf die zylinderförmige Hülle 11 dargestellt. Fig. 1c zeigt eine Seitenansicht, wie Fig. 1a nur die Ausrichtung um 90° verdreht.

Die zylindrische, feste Hülle 11 weist eine feste Raumform auf, wobei die zylindrische Hülle 11 an einer Stirnseite geschlossen ist und somit auf der anderen Stirnseite eine Öffnung 10 aufweist, durch die Elektrokabel 4 einsteckbar sind.

In der ersten Ausführungsform gemäß Fig. 1 sind drei Elektrokabel 4 mit üblicher Schutzumhüllung 43, beispielsweise vom Typ NYM dargestellt. Die in den Elektrokabeln 4 befindlichen, einzeln mit einer Isolierung 44 versehen, elektrischen Leiter 41 sind entsprechend der gewünschten Zuordnung in elektrische Klemmen 42 zur Kontaktierung eingesteckt. In Fig. 1c ist diese Situation vollständig dargestellt, wobei sie der Übersichtlichkeit halber in Fig. 1a nur für ein Elektrokabel der drei dort dargestellten Kabel ausgeführt ist.

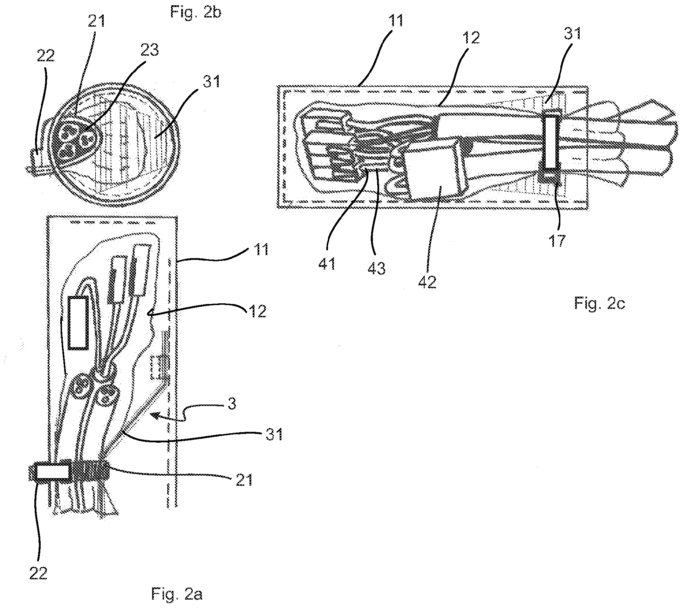

In der zylindrischen Hülle 11 sind nahe der Öffnung 10 im zylindrischen Körper der Hülle zwei Durchstecköffnungen 17 angeordnet, durch die ein Verspannmittel 2 in Form eines Kabelbinders 21 hindurchgesteckt ist, wobei ein Kabelbinderkopf 22 (siehe Fig. 2a) außerhalb der zylindrischen Hülle anzuordnen ist, damit die in die zylindrische Hülle 11 durch die Öffnung 10 eingesteckten Elektrokabelenden 40 mit dem Kabelbinder 21 untereinander und an der zylindrischen Hülle 11 von außen betätigt verspannt werden können. Die entsprechende Einbausituation ist in Fig. 1b ersichtlich.

In einer zweiten Ausführungsform gemäß Fig. 2a, b und c ist eine entsprechende Anordnung wiederum mit einer zylindrischen, festen Hülle 11 in Ansichten gemäß Fig. 1 dargestellt. In der zylindrischen Hülle 11 ist jedoch zusätzlich eine innere, elastische Hülle 12, ähnlich einer Plastiktüte vorgesehen. Ferner ist in der Innenseite der zylindrischen, festen Hülle 11 ein Eingriffschutz 3 in Form einer innenliegenden Lasche 31 vorgesehen.

Der als Verspannmittel 2 vorgesehene Kabelbinder 21 umschlingt dabei nahe der Öffnung 10 innerhalb der zylindrischen, festen Hülle 11 die innere, elastische Hülle 12 sowie die als Eingriffschutz 3 vorgesehene, innenliegende Lasche 31, wobei im noch nicht bestückten Grundzustand der Kabelbinder 21 soweit geöffnet ist, dass dieser umlaufend im Wesentlichen an der Innenwand der zylindrischen Hülle 11 anliegt und somit die innenliegende Lasche 31 ebenfalls an der Wandung der zylindrischen Hülle 11 anliegt und die innere, elastische Hülle 12 ebenfalls weit geöffnet ist.

Die Elektrokabelenden 40 sind wiederum mit ihren am Ende abisolierten Abschnitten der elektrischen Leiter 41 in elektrischen Klemmen 42 in der erforderlichen Weise miteinander kontaktiert und werden anschließend in die Hülle 1 bestehend aus der zylindrischen, festen Hülle 11 als äußere, eine feste Raumform aufweisende Hülle und die innere, elastische Hülle 12 eingesteckt.

Im Bereich des zu verspannenden Kabelbinders 21 ist in der Öffnung 10 innerhalb der inneren Hülle 12 ein dauerelastisches Dichtmittel 23 vorgesehen, so dass nach dem Verspannen des Kabelbinders 21 sich die innere Hülle 12 pressend um die umschlungenen Elektrokabel 4 legt und mittels des dort vorgehaltenen dauerelastischen Dichtmittels 23 ein Wasser dichter Verschluss ergibt, so dass dieser Abzweigdosenersatz sogar im Wasser (kurzzeitig) tauchfähig ist (IP 57).

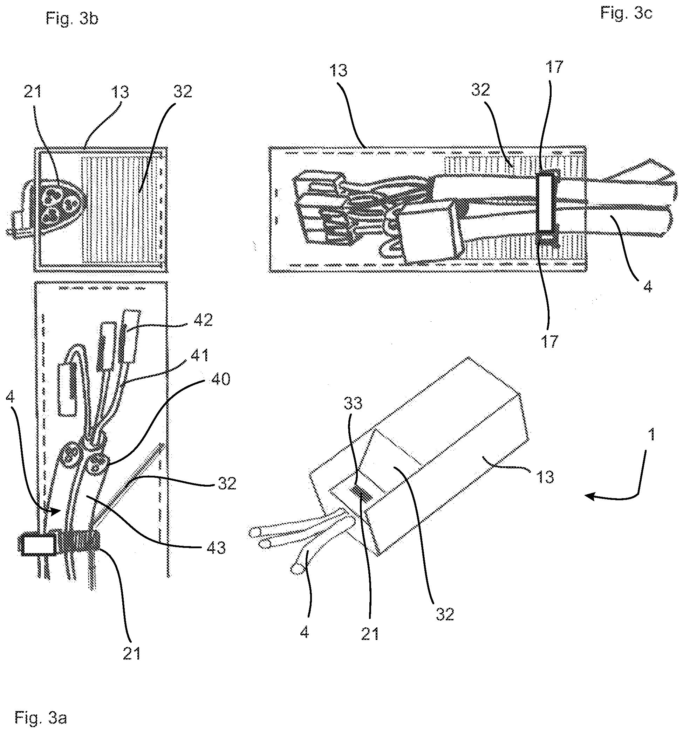

In den Fig. 3a bis d ist eine Anordnung als Abzweigdosenersatz in einer dritten Ausführungsform dargestellt, bei der die Hülle 1 als quaderförmige, feste Hülle 13 ausgebildet ist. Die quaderförmige Hülle 13 weist hier eine langgestreckte Form auf, wobei eine kleine Stirnseite geschlossen und die andere kleine Stirnseite offen ist, nämlich die Öffnung 10 bildet. Selbstverständlich kann die quaderförmige Hülle 13 auch Kubusform oder breitere Quererstreckung aufweisen. Nahe der Öffnung 10 sind wiederum zwei Durchstecköffnungen 17 angeordnet, durch die ein Kabelbinder 21 als Verspannmittel 2 durchgeführt ist. Die zur Seitenfläche mit den Durchstecköffnungen 17 gegenüberliegende Seite weist als Eingriffschutz 3 eine herunterfaltbare Lasche 32 als Teil dieser Seitenwand auf. Durch diese herunterfaltbare Lasche 32 sind zweite Durchstecköffnungen 33 vorgesehen, durch die der Kabelbinder 21 ebenfalls durchgeführt ist.

Im unbestückten Grundzustand ist der Kabelbinder 21 weit geöffnet, sodass der Kabelbinder 21 weitgehend an der Innenseite der quaderförmigen Hülle 13 anliegt und die herunterfaltbare Lasche 32 weit geöffnet ist und sich somit eine möglichst große Öffnung 10 bildet.

Nach dem Einstecken der fertig kontaktierten Elektrokabelenden 4 durch diese Öffnung 10 und somit durch den Kabelbinder 21 wird der Kabelbinder 21 am Kabelbinderkopf 22 von außen gespannt, sodass sich die herunterfaltbare Lasche 32 auf die umfassten Elektrokabel 4 herunterfaltet und die Elektrokabel 4 mit ihren Schutzumhüllungen 43 untereinander und mit der quaderförmigen Hülle 13 miteinander verspannt sind.

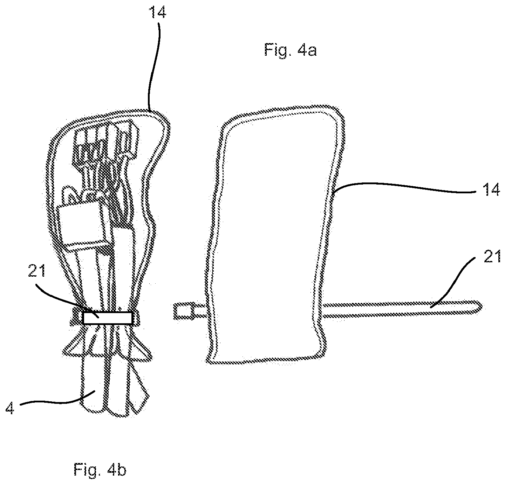

In den Fig. 4a und b ist eine viertes nicht beanspruchtes Beispiel, nämlich eine Anordnung, die ausschließlich aus einer elastischen Hülle 1, hier eine tütenförmige, elastische Hülle 14 mit den darin aufgenommenen Elektrokabeln 4 besteht. An der tütenförmigen Hülle 14, die wiederum eine Öffnung 10 zum Aufnehmen der Kabelenden 40 aufweist, ist als Verspannmittel 2 ein Kabelbinder 21 fixiert, beispielsweise außenseitig aufgeklebt.

In Fig. 4a ist die tütenförmige Hülle 14 in geöffnetem Zustand mit dem daran befestigten Verspannmittel 2 in Form eines Kabelbinders 21 ebenfalls im geöffneten Zustand dargestellt. In diesem geöffneten Zustand ist die Öffnung 10 der tütenförmigen Hülle 10 weit geöffnet, sodass mit elektrischen Klemmen 42 vorkontaktierte Elektrokabel 4 durch die Öffnung 10 in die tütenförmige Hülle 14 einsteckbar sind. Das Einstecken der Elektrokabel 4 erfolgt so weit, dass der Kabelbinder 21 mit seiner Klemmwirkung auf die äußere Schutzumhüllung 43 der Elektrokabel 4 greift. Nun wird der Kabelbinder um die tütenförmige Hülle 14 mit den Elektrokabelenden 40 einschließend umschlungen und verspannt, so wie in Fig. 4b dargestellt.

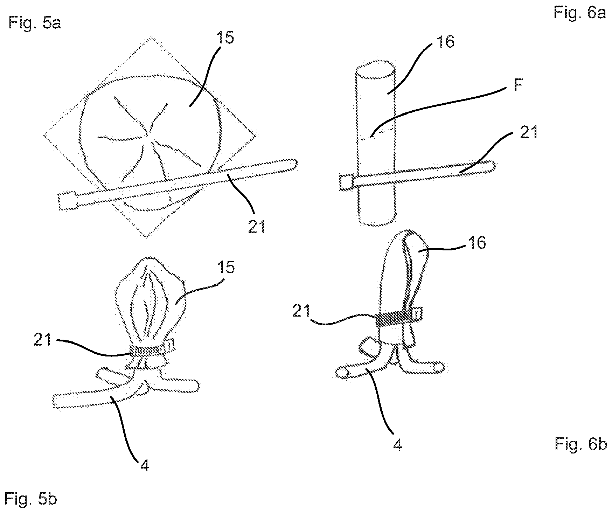

In den Fig. 5a und b ist als fünftes nicht beanspruchtes Beispiel eine Anordnung als Abzweigdosenersatz mit einer flächigen, elastischen Hülle 15 dargestellt. Die flächige Hülle, hier in Kreisform, hat auf ihrer Außenseite nahe einem Randbereich einen Kabelbinder 21 fixiert.

Liegt nun ein fertig konfektioniertes Bündel von mit elektrischen Klemmen 42 verbundenen Elektrokabeln 4 vor, wird dieses Ende mittig von der flächigen Hülle 15 überdeckt und allseits nach unten gefaltet. Im Bereich der Schutzumhüllung 43 der Elektrokabel 4 wird dann der Kabelbinder 21, die flächige Hülle 15 an ihrem gesamten Randbereich überdeckend, umschlungen und auf den Elektrokabeln 4, diese untereinander verspannend, verspannt. Diese Situation ist in Fig. 5b dargestellt.

In den Fig. 6a und b ist als sechstes nicht beanspruchtes Beispiel eine Anordnung als Abzweigdosenersatz mit einer schlauchförmigen, elastischen Hülle 16 dargestellt.

In Fig. 6a ist die unbestückte schlauchförmige Hülle 16 mit an dessen Außenseite fixiertem Kabelbinder 21 dargestellt. Die schlauchförmige, elastische Hülle 16 weist 2 Öffnungen auf, wobei lediglich die eine Öffnung 10 als Einstecköffnung für die vorkonfektionierten Elektrokabel 4 dient. Diese Kabel 4 werden maximal bis zur Hälfte in die schlauchförmige Hülle 16 eingeführt und anschließend wird die schlauchförmige Hülle 16 entlang der Faltlinie F (gestrichelte Linie) zurück gefaltet und der Kabelbinder um die schlauchförmige Hülle 16, nämlich beide Enden und die darin aufgenommenen Kabelenden 40 verspannt, wie dies in Fig. 6b dargestellt ist.

Mit der erfindungsgemäßen Anordnung als Abzweigdosenersatz können Elektrokabel 4 komfortabel und zeitsparend frei zugänglich vom Elektroinstallateur abgelängt, deren Leiter 41 abisoliert und mit Kabelklemmen 42 kontaktiert werden und dann vor dem endgültigen Einbau beim Innenausbau von Gebäuden mit der entsprechenden Hülle 1 umhüllt und mit dem Verspannmittel 2 verspannt werden, sodass eine Zugentlastung derart erfolgt, dass bei Beanspruchung einzelner Elektrokabel 4 diese über das Verspannmittel 2 die eingeleiteten Kräfte auf die anderen Elektrokabel 4 übertragen, jedoch nicht auf die hinter dem Verspannmittel 2 angeordneten, in den Klemmen 42 kontaktierten elektrischen Leiter 41. Es wird somit sicher vermieden, dass Wackelkontakte und damit Brandgefahr entstehen könnte. Ferner lässt sich eine spätere Ergänzung an diesen "Ersatzabzweigdosen" durch das Entfernen und spätere Wiederverschließen der die Kabelenden 40 umschließenden Hülle 1 jederzeit zeitsparend verwirklichen.

Ferner ist es durch entsprechend elastische und wasserdicht ausgebildete Hüllen 1 leicht möglich, einen Spritzwasserschutz zu verwirklichen. Bei geeigneter Wahl von zusätzlichen Dichtmitteln, beispielsweise dauerelastischen Dichtmitteln 23 im Bereich des Verspannmittels 2 im Inneren der sich zuziehenden Öffnung 10 kann sogar ein höherwertiger Wasserschutz erreicht werden.

Sämtlichen Ausführungsformen der erfindungsgemäßen Idee liegt zugrunde, dass alle Elektrokabel 4, die miteinander kontaktiert sind beziehungsweise an dieser einen Stelle gesichert werden sollen, durch eine Hülle 1 von dieser umhüllt werden und über ein geeignetes Verspannmittel 2 miteinander fixiert werden, um auftretende Zugkräfte auf die stabile Schutzumhüllung 43 der Elektrokabel 4 zu leiten.

### Bezugszeichenliste

- 1: Hülle
- 10: Öffnung
- 11: zylindrische, feste Hülle
- 12: innere, elastische Hülle
- 13: quaderförmige, feste Hülle
- 14: tütenförmige, elastische Hülle
- 15: flächige, elastische Hülle
- 16: schlauchförmige, elastische Hülle
- 17: Durchstecköffnung

- 2: Verspannmittel
- 21: Kabelbinder
- 22: Kabelbinderkopf
- 23: dauerelastisches Dichtmittel

- 3: Eingriffschutz
- 31: innenliegende Lasche
- 32: herunterfaltbare Lasche
- 33: zweite Durchstecköffnung

- 4: Elektrokabel
- 40: Elektrokabelende
- 41: Leiter
- 42: elektrische Klemme
- 43: Schutzumhüllung
- 44: Isolierung

- F: Faltlinie

## Patentansprüche

1. Anordnung als Abzweigdosenersatz mit wenigstens zwei an der Anordnung endenden, mit einer Schutzumhüllung (43) versehenen Elektrokabeln (4) mit einzelnen mit einer Isolierung (44) versehenen elektrischen Leitern (41), wobei eine Hülle (1), die aus einem festen Material in fester Raumform mit einer Öffnung (10), durch die die Enden (40) der Elektrokabel (4) einfügbar sind, gebildet ist, und ein Verspannmittel (2) vorgesehen sind, wobei die Hülle (1) die Enden (40) der Elektrokabel (4), die Schutzumhüllung (43) überlappend, umhüllt und das Verspannmittel (2) wenigstens einen Teil der Hülle (1) und die Elektrokabel (4) mit der Schutzumhüllung (43) umgreifend angeordnet und zur gegenseitigen Zugentlastung der Hülle (1) und der Elektrokabel (4) verspannt ist, **dadurch gekennzeichnet, dass** die Hülle (1) aus festem Material im Bereich der Öffnung (10) aus elastischem Material gebildet ist, wobei das elastische Material an der im Übrigen aus festem Material bestehenden Hülle (1) angeformt ist und die Öffnung (10) durch Zusammenziehen des elastischen Materials im Bereich des Verspannmittels (2) verschlossen ist.

2. Anordnung nach Anspruch 1, **dadurch gekennzeichnet, dass** die Hülle (1) aus einem elektrisch nichtleitenden und reißfesten Material gebildet ist.

3. Anordnung nach einem der vorangehenden Ansprüche, **dadurch gekennzeichnet, dass** die Hülle (1) im Bereich des Verspannmittels (2) ein dauerelastisches Dichtmittel (23) aufweist.

4. Anordnung nach einem der vorangehenden Ansprüche, **dadurch gekennzeichnet, dass** die Hülle (1) zweiteilig ausgebildet ist, wobei eine innere Hülle (12) aus elastischem Material und eine äußere Hülle (1) in einer festen Raumform vorgesehen sind.

5. Anordnung nach einem der vorangehenden Ansprüche, **dadurch gekennzeichnet, dass** in der Raumform nahe der Öffnung (10) ein sich über die Öffnung (10) erstreckender Eingriffschutz (3) vorgesehen ist, wobei der Eingriffschutz (3) einseitig an der Hülle (1) in der Raumform fixiert ist und an seinem anderen Ende von dem Verspannmittel (2) umgreifend fixiert ist.

6. Anordnung nach einem der vorangehenden Ansprüche, **dadurch gekennzeichnet, dass** das Verspannmittel (2) ein Kabelbinder (21), eine Spannschelle oder eine Schraubklemme ist.

7. Anordnung nach einem der vorangehenden Ansprüche, **dadurch gekennzeichnet, dass** das Verspannmittel (2) an der Hülle (1) befestigt oder durch die Hülle (1) gesteckt ist.

8. Anordnung nach einem der vorangehenden Ansprüche, **dadurch gekennzeichnet, dass** die elektrischen Leiter (41) der Elektrokabel (4) mit ihren abisolierten Enden an elektrischen Klemmen (42) befestigt sind.

9. Verfahren zum Installieren einer Anordnung als Abzweigdosenersatz gemäß einem der vorangehenden Ansprüche, mit den Schritten:
- Kontaktieren der elektrischen Leiter (41) mittels elektrischer Klemmen (42),
- Einführen der Enden (40) der Elektrokabel (4) in die Hülle (1) durch das noch nicht verspannte Verspannmittel (2) und
- Anziehen des Verspannmittels (2) und damit mechanisches Verbinden der Schutzumhüllungen (43) der Elektrokabel (4) untereinander und mit der Hülle (1), wobei die Öffnung (10) an der Hülle (1) mit einem Eingriffschutz (3) verschlossen wird, indem der Eingriffschutz (3) zusammen mit den Elektrokabeln (4) mit dem Verspannmittel (2) verspannt wird.

10. Verfahren nach Anspruch 9, **dadurch gekennzeichnet, dass** die Hülle (1) nach der Bestückung mit den Elektrokabeln (4) und dem Verspannen mit dem Verspannmittel (2) mit einer dauerelastischen Dichtmasse vollständig befüllt wird.

## Claims

1. An assembly as a junction-box replacement with at least two electrical cables (4), which end at the assembly and are provided with a protective sheath (43), with individual electrical conductors (41) provided with insulation (44), wherein a cover (1) which is formed from a solid material in a solid three-dimensional form with an opening (10) through which the ends (40) of the electrical cables (4) can be inserted, and a clamping means (2) are provided, wherein the cover (1) encases the ends (40) of the electrical cables (4), overlapping the protective sheath (43), and the clamping means (2) is arranged encompassing at least part of the cover (1) and the electrical cables (4) with the protective sheath (43) and is clamped for reciprocal strain relief of the cover (1) and the electrical cables (4), **characterised in that** the cover (1) made of solid material in the region of the opening (10) is formed from elastic material, wherein the elastic material is formed on the cover (1) which otherwise consists of solid material and the opening (10) is closed by drawing together the elastic material in the region of the clamping means (2).

2. An assembly according to Claim 1, **characterised in that** the cover (1) is formed from an electrically non-conductive and tear-resistant material.

3. An assembly according to one of the preceding claims, **characterised in that** the cover (1) has a permanently elastic sealing means (23) in the region of the clamping means (2).

4. An assembly according to one of the preceding claims, **characterised in that** the cover (1) is formed in two parts, with an inner cover (12) of elastic material and an outer cover (1) in a solid three-dimensional form being provided.

5. An assembly according to one of the preceding claims, **characterised in that** in the three-dimensional form a finger guard (3) which extends across the opening (10) is provided close to the opening (10), wherein the finger guard (3) is fixed on one side to the cover (1) in the three-dimensional form and at its other end is fixed in encompassing manner by the clamping means (2).

6. An assembly according to one of the preceding claims, **characterised in that** the clamping means (2) is a cable tie (21), a clamping collar or a screw terminal.

7. An assembly according to one of the preceding claims, **characterised in that** the clamping means (2) is fastened to the cover (1) or is pushed through the cover (1).

8. An assembly according to one of the preceding claims, **characterised in that** the electrical conductors (41) of the electrical cables (4) are fastened by their stripped ends to electrical terminals (42).

9. A method for installing an assembly as a junction-box replacement according to one of the preceding claims, having the following steps:
- contacting the electrical conductors (41) by means of electrical terminals (42),
- introducing the ends (40) of the electrical cables (4) into the cover (1) through the clamping means (2) which is not yet clamped, and
- tightening the clamping means (2) and hence mechanically connecting the protective sheaths (43) of the electrical cables (4) together and to the cover (1), wherein the opening (10) on the cover (1) is closed with a finger guard (3), in that the finger guard (3) together with the electrical cables (4) is clamped with the clamping means (2).

10. A method according to Claim 9, **characterised in that** the cover (1) after being equipped with the electrical cables (4) and being clamped with the clamping means (2) is filled completely with a permanently elastic sealing compound.

## Revendications

1. Ensemble de substitution de boîte de dérivation avec au moins deux câbles électriques (4) se terminant dans l'ensemble et munis d'une gaine de protection (43) et ayant des fils électriques (41) séparés munis d'une isolation (44), une enveloppe (1) et des moyens de serrage (2) étant prévus, l'enveloppe étant formée d'un matériau solide sous une forme spatiale rigide avec une ouverture (10) à travers laquelle les extrémités (40) des câbles électriques (4) peuvent être introduites, l'enveloppe (1) recouvrant les extrémités (40) des câbles électriques (4) en chevauchant la gaine de protection (43), et les moyens de serrage (2) étant disposés en entourant au moins une partie de l'enveloppe (1) et les câbles électriques (4) avec la gaine de protection (43) et étant serrés pour la décharge mutuelle de traction de l'enveloppe (1) et des câbles électriques (4), **caractérisé en ce que** dans la région de l'ouverture (10), l'enveloppe (1) est formée d'un matériau solide en matériau élastique, le matériau élastique étant appliqué sur l'enveloppe (1) qui par ailleurs est composée d'un matériau solide, et l'ouverture (10) étant fermée en resserrant le matériau élastique dans la région des moyens de serrage (2).

2. Ensemble selon la revendication 1, **caractérisée en ce que** l'enveloppe (1) est formée d'un matériau électriquement non conducteur et résistant à la déchirure.

3. Ensemble selon l'une des revendications précédentes, **caractérisée en ce que** l'enveloppe (1) présente des moyens d'étanchéité (23) à élasticité permanente dans la région des moyens de serrage (2).

4. Ensemble selon l'une des revendications précédentes, **caractérisé en ce que** l'enveloppe (1) est formée en deux parties, une enveloppe intérieure (12) en matériau élastique et une enveloppe extérieure (1) sous une forme spatiale rigide étant prévues.

5. Ensemble selon l'une des revendications précédentes, **caractérisé en ce qu'**une protection contre les manipulations (3) s'étendant sur l'ouverture (10) est prévue dans la forme spatiale près de l'ouverture (10), la protection contre les manipulations (3) étant fixée d'un côté à l'enveloppe (1) dans la forme spatiale et étant fixée à son autre extrémité de manière à être entourée par les moyens de serrage (2).

6. Ensemble selon l'une des revendications précédentes, **caractérisé en ce que** les moyens de serrage (2) sont un serre-câble (21), un collier de serrage ou une borne à vis.

7. Ensemble selon l'une des revendications précédentes, **caractérisé en ce que** les moyens de serrage (2) sont fixés à l'enveloppe (1) ou sont insérés à travers l'enveloppe (1).

8. Ensemble selon l'une des revendications précédentes, **caractérisée en ce que** les fils électriques (41) des câbles électriques (4) sont fixés avec leurs extrémités dénudées à des bornes électriques (42).

9. Procédé d'installation d'un ensemble de substitution de boîte de dérivation selon l'une des revendications précédentes, comprenant les étapes suivantes consistant à :
- mettre en contact les fils électriques (41) au moyen de bornes électriques (42),
- introduire les extrémités (40) des câbles électriques (4) dans l'enveloppe (1) à travers les moyens de serrage (2) non encore serrés et
- serrer les moyens de serrage (2) et ainsi relier mécaniquement les gaines de protection (43) des câbles électriques (4) entre elles et à l'enveloppe (1), l'ouverture (10) de l'enveloppe (1) étant fermée par une protection contre les manipulations (3) en serrant la protection contre les manipulations (3) et avec elle les câbles électriques (4) à l'aide des moyens de serrage (2).

10. Procédé selon la revendication 9, **caractérisé en ce que** l'enveloppe (1) est entièrement remplie d'une masse d'étanchéité à élasticité permanente après le montage des câbles électriques (4) et le serrage avec les moyens de serrage (2).
